## Europäisches Patentamt
## European Patent Office
## Office européen des brevets

(19)

(11) Numéro de publication: **0 052 543**
**B1**

(12) # FASCICULE DE BREVET EUROPEEN

(45) Date de publication du fascicule du brevet:
14.05.86

(51) Int. Cl.⁴: **F 16 D 55/224**

(21) Numéro de dépôt: **81401658.0**

(22) Date de dépôt: **21.10.81**

(54) **Frein à disque.**

(30) Priorité: **13.11.80 FR 8024138**

(43) Date de publication de la demande:
**26.05.82 Bulletin 82/21**

(45) Mention de la délivrance du brevet:
**14.05.86 Bulletin 86/20**

(84) Etats contractants désignés:
**DE GB IT SE**

(56) Documents cités:
**FR - A - 1 594 263**
**FR - A - 2 030 190**
**US - A - 2 761 484**
**US - A - 3 209 806**
**US - A - 3 244 212**
**US - A - 3 343 581**
**US - A - 3 917 033**

(73) Titulaire: **BENDIX France, 126, rue de Stalingrad,
F-93700 Drancy (FR)**

(72) Inventeur: **Delaunay, Jean, 18 Rue Pegoud,
F-93700 Drancy (FR)**

(74) Mandataire: **Poidatz, Emmanuel et al, Service Brevets
Bendix 44 rue François 1er, F-75008 Paris (FR)**

ACTORUM AG

## Description

L'invention a pour objet un frein à disque à étrier monté coulissant sur un support fixe au moyen d'au moins une colonnette axiale.

La demande de brevet d'invention française no 70–02452 publiée sous le no 2 030 190 propose un frein à disque dont l'étrier est monté coulissant sur un support fixe au moyen d'au moins une colonnette axiale reçue en coulissement dans un alésage correspondant de l'étrier. Dans ce frein, la colonnette est constituée par un manchon cylindrique fixé au support fixe au moyen d'un boulon introduit dans l'alésage interne du manchon et dont l'extrémité filetée est vissée dans un trou taraudé du support fixe de façon à maintenir le manchon serré entre le support fixe et la tête du boulon. La zone de coulissement entre l'étrier et le support fixe, constituée par la coopération entre l'alésage formé dans l'étrier et la surface externe du manchon cylindrique est protégée au moyen de deux soufflets de caoutchouc, dont les extrémités sont fixées, d'une part sur l'étrier et d'autre part sur le manchon.

Le document US-A-3 917 033 décrit un frein selon le préambule de la revendication 1, du type ci-dessus, et mentionne que les soufflets de protection retiennent le manchon dans l'alésage de l'étrier. Dans ce type de frein, lorsque l'on désire procéder au démontage de l'étrier, afin de par exemple remplacer les organes de friction usagés, on doit dévisser le boulon de la colonnette axiale, afin de désolidariser cette dernière du support fixe pour permettre le basculement ou la dépose de l'étrier. Lors de cette opération, il arrive parfois que les soufflets de protection soient détériorés accidentellement, notamment lorsque l'on exerce une traction axiale trop importante sur le manchon de coulissement dans la direction correspondant à l'extraction du bouchon. De plus, le boulon, une fois dévissé du support fixe peut s'échapper librement du manchon. On comprend que lors de remontage du frein il est alors nécessaire de réintroduire le boulon dans le manchon pour venir le visser à nouveau dans le support fixe; cette opération s'avère souvent compliquée, étant donné le peu d'espace généralement disponible pour effectuer les réparations sur les organes de frein.

L'invention a pour but de proposer un frein à disque qui remédie aux inconvénients mentionnés plus haut. Dans ce but, l'invention propose un frein à disque du type décrit ci-dessus, caractérisé en ce que ladite colonnette comporte des moyens de butée axiale franche indépendants desdits soufflets associés audit manchon pour limiter les déplacements axiaux de ce dernier par rapport audit étrier lorsque la tige dudit boulon est dévissée du support fixe lesdits moyens de butée comportant d'une part une surface de butée susceptible de venir en appui franc sur une surface correspondante formée sur ledit étrier lorsque ledit manchon est sollicité en traction axiale dans la direction correspondante à l'extraction dudit boulon et comportant d'autre part des épaulements radiaux internes susceptibles de coopérer axialement avec un bord délimitant une portion de l'extrémité filetée du boulon.

Dans le mode de réalisation proposé, les moyens de butée sont constitués par une couronne de section transversale en forme de U dont la paroi latérale cylindrique interne est montée dans l'alésage interne du manchon et dont le fond annulaire plat est maintenu serré entre l'extrémité du manchon et le support fixe lorsque la colonnette est fixée à ce dernier, la surface de butée étant constituée par le bord libre extrême de la paroi latérale cylindrique externe de la couronne. La paroi latérale cylindrique interne de la couronne est munie d'un épaulement radial interne fileté dont le diamètre nominal est égal au diamètre nominal du filetage de l'extrémité filetée du boulon.

On décrira maintenant à titre d'exemple un mode de réalisation de l'invention en se référant aux dessins annexés dans lesquels:

– La Figure 1 représente un frein à disque à étrier monté coulissant au moyen de deux colonnettes axiales, d'un type connu de l'art antérieur;
– La Figure 2 est une vue en coupe selon la ligne 2–2 de la Figure 1;
– Les Figures 3a, 3b, 3c, représentent un mode de réalisation des colonnettes axiales de coulissement selon la présente invention.

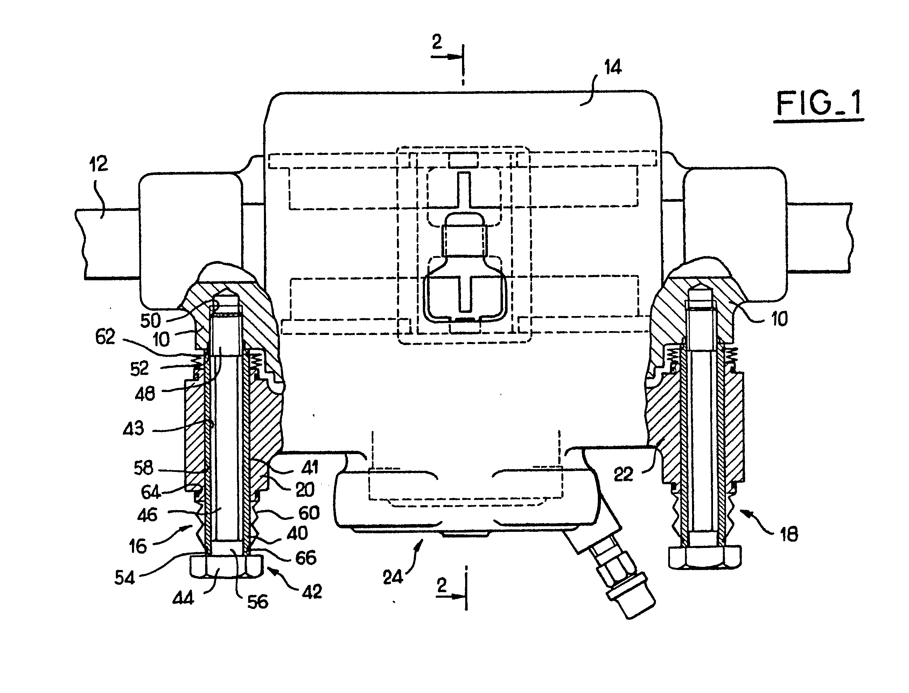

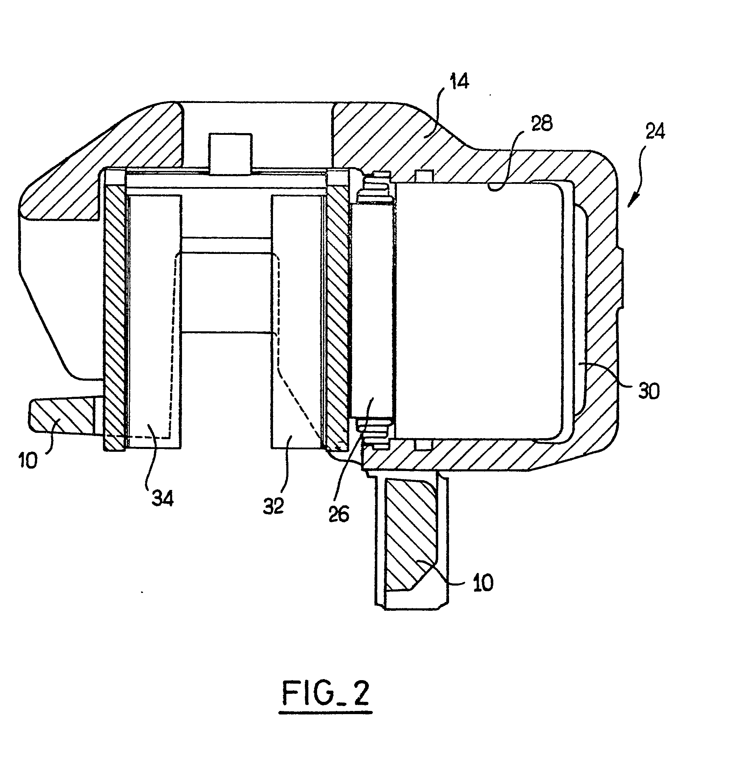

Le frein à disque représenté aux Figures 1 et 2 comporte un organe support 10 prévu pour être associé à une partie fixe d'un véhicule (non représenté) et constitué dans le mode de réalisation représenté par un élément disposé au voisinage d'un disque 12 prévu pour être associé en rotation à une roue de véhicule (non représentée). Le support fixe 10 reçoit en coulissement au moyen de deux colonnettes axiales circonférentiellement espacées 16 et 18 un étrier mobile 14 chevauchant le disque. Les axes des colonnettes 16 et 18 sont sensiblement parallèles à l'axe de rotation du disque 12. Les colonnettes 16 et 18 sont disposées entre le support fixe 10 et des bras 20 et 22 de l'étrier 14. L'étrier 14 comporte des moyens d'actionnement 24 constitués par un moteur de frein hydraulique comprenant un piston 26 monté coulissant dans un alésage 28 défini dans l'étrier 14 et sensible à la pression régnant dans une chambre de commande 30 susceptible d'être reliée à une source de pression telle que par exemple le maître-cylindre du véhicule. Le piston 26 est disposé de façon à solliciter directement un premier élément de friction 32 contre une première face du disque 12 lorsque le fluide sous pression est admis dans la chambre 30. Sous l'effet de cette sollicitation, l'étrier 14 se déplace par réaction et coulisse sur les colonnettes 16 et 18 afin de solliciter un second élément de friction 34 contre l'autre face du disque 12. Dans le mode de réalisation représenté, les éléments de friction 32 et 34 sont reçus en ancrage et en coulissement dans les bords circonférentiellement espacés d'une ouverture (non représentée) formée dans le support fixe 10.

Les colonnettes axiales de coulissement 16 et 18 sont, dans le frein représenté à la figure 1, d'un type identique, et l'on décrira maintenant plus en détail la colonnette de coulissement 16. La colonnette 16 est constituée par un manchon cylindrique 40 qui est fixé au support fixe 10 au moyen d'un boulon 42 reçu dans l'alésage interne 43 du manchon cylindrique 40. Le boulon 42 comprend une tête 44 et une tige 46 dont l'extrémité filetée 48 est montée vissée dans un trou taraudé 50 formé dans le support fixe 10. Grâce au boulon 42 le manchon cylindrique 40 est maintenu serré entre le support fixe 10, contre lequel il prend appui par une première de ses extrémités 52, et la tête du boulon 44 contre laquelle il prend appui par la seconde de ses extrémités 54. Une portion 56 de la tige 46 du boulon 44 possède un diamètre sensiblement égal au diamètre intérieur de l'alésage interne 43 du manchon cylindrique 43 afin d'assurer une bonne coaxialité entre le boulon 42 et le manchon cylindrique 40. Le manchon cylindrique 40 est reçu en coulissement dans un alésage ouvert correspondant 58 formé dans le bras 20 de l'étrier 14. La zone de coulissement formée entre la surface cylindrique externe 41 du manchon 40 et la surface de l'alésage ouvert 58 est protégée au moyen de deux soufflets de protection en caoutchouc 60 et 62. Les soufflets 60 et 62 sont fixés, de manière identique, d'une part dans une gorge 64 formée dans le bras 20 de l'étrier 14 et d'autre part dans une gorge 66 formée sur l'extrémité du manchon de coulissement 40.

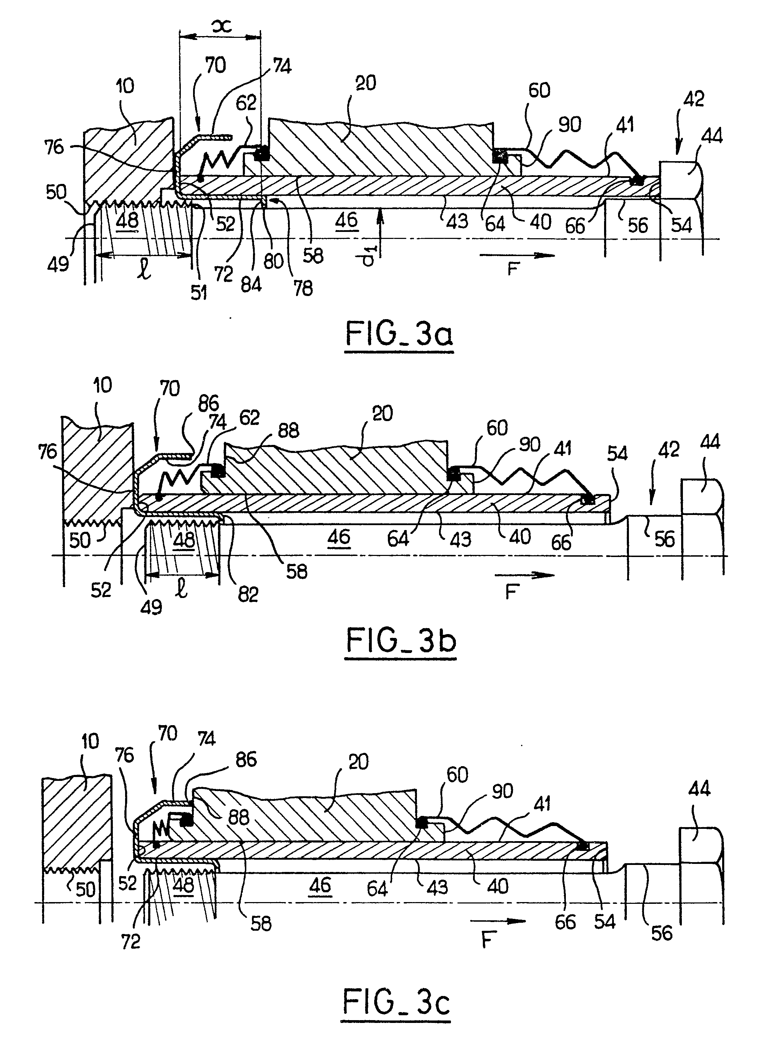

On a représenté aux figures 3a, 3b, 3c la colonnette axiale de coulissement 16 munie des perfectionnements objets de la présente invention. Selon la présente invention, la colonnette axiale 16 est munie de moyens de butée axiale associés au manchon 40 afin de limiter les déplacements axiaux de ce dernier par rapport au bras de l'étrier 20 lorsque la tige 46 du boulon 42 est dévissée du support fixe, afin d'éviter de détériorer les soufflets de protection 60 et 62. Les moyens de butée axiale sont constitués, dans le mode de réalisation représenté, par une pièce ou couronne 70. La couronne 70 est une couronne de révolution sensiblement coaxiale à l'axe principal de la colonnette 16 et qui présente en section transversale dans un plan contenant l'axe de la couronne, sensiblement la forme d'un U. La couronne 70 est composée d'une paroi latérale cylindrique interne 72, d'une paroi latérale cylindrique externe 74 coaxiale à la paroi latérale cylindrique interne 72 et d'un fond annulaire plat 76 reliant les parois latérales 72 et 74. La colonnette est représentée à la figure 3a dans sa position assemblée et fixée au support fixe 10. Dans cette position, la paroi latérale cylindrique interne 72 de la couronne 70 est montée dans l'alésage interne 43 du manchon cylindrique 40, et le fond annulaire plat 76 est maintenu serré entre le bord d'extrémité 52 du manchon cylindrique et le support fixe 10 au moyen du boulon 42. La paroi latérale interne 72 est munie d'un épaulement radial interne 78, constitué dans le mode de réalisation représenté par un flanc tranversal annulaire s'étendant depuis la paroi latérale cylindrique interne 72. L'ouverture circulaire 80 définie par l'épaulement radial interne 78 est filetée et le diamètre nominal du filetage ainsi formé sur l'épaulement interne 78 est égal au diamètre nominal du filetage de l'extrémité filetée 48 de la tige 46 du boulon 42. La paroi latérale cylindrique interne 72 de la couronne 70 est, dans le mode de réalisation représenté, montée avec jeux dans l'alésage interne 43 du manchon cylindrique 40. Comme on peut le constater notamment à la figure 3a, le diamètre $d_1$ de la partie non filetée de la tige 46 du boulon 42 est inférieur au diamètre nominal du filetage de l'extrémité filetée 48 de la tige 46.

Lorsqu'un opérateur désire réaliser l'assemblage de la colonnette 16 et sa fixation sur le support fixe 10, il introduit le manchon 40, muni de la couronne 70, dans l'alésage ouvert 58 du bras 20 de l'étrier puis met en place les soufflets 60 et 62 dans les gorges 64 et 66 formées respectivement sur le bras 20 et le manchon 40. Ces opérations étant réalisées l'opérateur introduit le boulon 42 dans l'alésage interne 43 du manchon cylindrique 40, jusqu'à ce que la face d'extrémité 49 de l'extrémité filetée 48 de la tige 46 du boulon 42 vienne en contact avec la face d'extrémité 82 de l'épaulement radial interne 78 de la couronne 70; dans cette position, l'opérateur visse l'extrémité filetée 48 du boulon 42 dans l'ouverture circulaire filetée 80 de l'épaulement 78 jusqu'à ce que la totalité de la partie filetée 48 ait dépassé l'épaulement radial interne 78. L'opérateur peut alors, grâce à cette dernière caractéristique, faire avancer le boulon 42 en direction du support fixe et venir visser l'extrémité 48 dans le trou taraudé 50 du support fixe 10 pour maintenir le manchon cylindrique 40 et la couronne 70 serrés et comprimés entre le support fixe 10 et la tête du boulon 44.

Lorsque l'opérateur veut, afin par exemple de procéder au remplacement des organes de friction, démonter les colonnettes axiales 16 et 18, il commence par dévisser l'extrémité filetée 48 du trou taraudé 50 dans lequel elle est montée. Il déplace ensuite la tige du boulon vers la droite (en regardant les figures) jusqu'à ce que le bord latéral 51 délimitant la partie filetée 48 de la tige 46 du boulon 42 vienne en butée contre la seconde face d'extrémité 84 de l'épaulement radial interne de la couronne 70. Le boulon occupe alors la position représentée à la figure 3b.

La longueur «1» de la partie filetée 48 de la tige 46 du boulon 42 est inférieur à la distance «x» séparant l'extrémité 52 du manchon cylindrique 40 de la face d'extrémité 84 de l'épaulement 78 faisant face au support fixe 10. Grâce à cette caractéristique, on constate que dans la position occupée à la figure 3b, la face d'extrémité 49 de la tige du boulon 42 est complètement effacée en retrait de l'extrémité 52 du manchon cylindrique 40 et de la paroi annulaire 76 de la couronne 70. L'opérateur peut alors s'il le désire basculer l'étrier autour de la colonnette non encore démontée. Si l'opérateur continue à exercer un effort de traction axiale dans la direction indiquée aux figures par la flèche F, le manchon cylindrique 40 se déplace dans la direction indiquée par la flèche F, entraînant avec lui la couronne 70, jusqu'à ce que le bord libre extrême 86 de la paroi latérale externe 74 de la couronne 70 vienne en butée sur la surface 88 formée en vis-à-vis sur le bras 20 de l'étrier 14 et occupe ainsi la position représentée à la figure 3c. Dans cette nouvelle position, la couronne 70 constitue un moyen de butée axiale associé au manchon 40 pour empêcher tout déplacement axial supplémentaire du manchon 40 par rapport à l'étrier 14 dans la direction indiquée par la flèche F. On constate en effet que tout effort axial de traction supplémentaire exercé sur le boulon 42 ou sur le manchon 40 est impossible, la couronne 70 empêchant tout déplacement axial du manchon par rapport à l'étrier, et qu'ainsi toute détérioration ou arrachement des soufflets 60 et 62 est rendue impossible. On comprend également que grâce à l'épaulement radial interne fileté 78, une chute ou une perte accidentelle du boulon 42 est impossible, ce dernier étant maintenu dans l'alésage interne 43 du manchon 40 grâce à la coopération entre la face d'extrémité 84 de l'épaulement radial interne 78 et le bord 51 délimitant la portion filetée de la tige du boulon 42. L'épaulement radial interne 78, en assurant le maintien en position du bouchon 42 dans le manchon 40, participe également à la protection des soufflets 60 et 62; en effet, lorsque l'étrier est déposé, si l'opérateur exerce une traction axiale sur le manchon cylindrique dans la direction opposée à la flèche F, le manchon 40 et la couronne 70 se déplacent vers la gauche entraînant le boulon 42 jusqu'à ce que la tête 44 de ce dernier vienne en butée sur la surface 90 formée en vis-à-vis sur le bras 20 de l'étrier. Dans cette position, le manchon ne peut plus être déplacé vers la gauche et la destruction des soufflets 60 et 62 est ainsi évitée. Néanmoins, si l'opérateur désire démonter complètement le boulon 42 il doit dévisser ce dernier jusqu'à ce que l'épaulement radial interne 78 se dégage complètement de la portion filetée 48 de la tige 46 du boulon 42. A cet effet la longueur axiale de l'épaulement radial 78, c'est-à-dire la distance séparant les deux faces d'extrémité 82 et 84, est inférieure à la longueur du manchon 40.

Dans le mode de réalisation représenté, la couronne 70 est réalisée en tôle emboutie, l'épaulement radial interne fileté 78 est limité à un flanc transversal annulaire venu de matière avec la gorge 66, le filetage de cet épaulement interne étant constitué d'un unique filet formé par l'épaisseur de la tôle emboutie qui correspond sensiblement au bas du filet de la portion filetée de la tige 46 du boulon 42.

**Revendications**

1. Frein à disques (14) monté coulissant sur un support fixe (10) au moyen d'au moins une colonnette axiale (16) reçue en coulissement dans un alésage ouvert (58) de l'étrier (14), ladite colonnette (16) comprenant un manchon cylindrique (40) fixé audit support fixe (10) au moyen d'un boulon (42) dont la tige (46) est reçue dans l'alésage interne (43) du manchon cylindrique et dont l'extrémité filetée (48) est vissée dans un trou taraudé (50) dudit support fixe (10) de façon à maintenir le manchon (40) serré entre le support fixe (10) et la tête (44) du boulon (42), des soufflets de protection (60, 62) étant montés entre ledit manchon (40) et l'étrier (14) de part et d'autre de ce dernier et susceptibles de retenir le manchon (40) dans ledit alésage (58) caractérisé en ce que ladite colonnette (16) comporte des moyens de butée axiale franche (70) indépendants desdits soufflets (60, 62) associés audit manchon (40) pour limiter les déplacements axiaux de ce dernier par rapport audit étrier (14) lorsque la tige (46) dudit boulon (42) est dévissée du support fixe (10) lesdits moyens de butée (70) comportant d'une part une surface de butée (86) susceptible de venir en appui franc sur une surface correspondante (88) formée sur ledit étrier (14) lorsque ledit manchon (40) est sollicité en traction axiale dans la direction correspondante à l'extraction dudit boulon (42) et comportant d'autre part des épaulements radiaux internes (78) susceptibles de coopérer axialement avec un bord (51) délimitant une portion de l'extrémité filetée (48) du boulon (42).

2. Frein à disque selon la revendication 1, caractérisé en ce que lesdits moyens de butée sont constitués par une couronne (70) de section transversale en forme de U dont la paroi latérale cylindrique interne (72) est montée dans l'alésage interne (43) dudit manchon (40) et dont le fond annulaire plat (76) est maintenu serré entre l'extrémité du manchon (52) et le support fixe (10) lorsque ladite colonnette (16) est fixée à ce dernier ladite surface de butée (86) étant constituée par le bord libre extrême de la paroi latérale cylindrique externe (74) de ladite couronne (70).

3. Frein à disque selon la revendication 2, caractérisé en ce que ladite paroi latérale cylindrique interne (72) de la couronne (70) est munie d'un épaulement radial interne fileté (78) dont le diamètre nominal est égal au diamètre nominal du filetage de l'extrémité filetée (48) du boulon (42).

4. Frein à disque selon la revendication 3, caractérisé en ce que ledit épaulement radial interne (78) a une longueur axiale inférieure à la longueur du manchon et délimitée par les deux faces d'extrémité (82, 84) dudit épaulement (78), la partie non filetée de la tige du boulon étant d'un diamètre ($d_1$) inférieur audit diamètre nominal de l'extrémité filetée (48) de la tige du boulon (42).

5. Frein à disque selon la revendication 4, caractérisé en ce que la longueur («1») de la portion filetée (48) de la tige (46) du boulon (42) vissée dans le trou taraudé (50) est inférieure à la distance (x) séparant la face d'extrémité (84) de l'épaulement (78) faisant face au support fixe (10) de l'extrémité (52) dudit manchon (40) en appui sur le support fixe (10).

6. Frein à disque selon l'une quelconque des revendications 2 à 4, caractérisé en ce que ladite couronne (70) est réalisée en tôle emboutie.

7. Frein à disque selon la revendication 6 prise en combinaison avec l'une quelconque des revendications 3 à 5, caractérisé en ce que ledit épaulement radial interne (78) fileté est constitué par un flanc transversal annulaire s'étendant depuis ladite paroi latérale cylindrique interne (72) de la couronne (70).

## Claims

1. A disc brake (14) slidingly mounted on a fixed support (10) by means of at least one axial column (16) slidingly received in an open bore (58) of the caliper (14), said column (16) comprising a cylindrical sleeve (40) fixed to said fixed support (10) by means of a bolt (42) having a shaft (46) received in the internal bore (43) of the cylindrical sleeve and a threaded extremity (48) engaged in a tap hole (50) of the fixed support (10) such as to maintain the sleeve (40) clamped between the fixed support (10) and the head (44) of the bolt (42), protective bellows (60, 62) being mounted between said sleeve (40) and the caliper (14) on both sides of the latter and adapted to retain the sleeve (40) in said bore (58), characterized in that said column (16) comprises axial abutment means (70) independent of said bellows (60, 62) and associated with said sleeve (40) for limiting axial displacement of the latter with respect to said caliper (14) when the shaft (46) of the bolt (42) is being disengaged from the fixed support (10), said abutment means (70) comprising on the one hand an abutment surface (86) adapted to freely engage a corresponding surface (88) formed on said caliper (14) when said sleeve (40) is biased by axial traction in the direction corresponding to removal of said bolt (42), and comprising on the other hand radial internal shoulders (78) adapted to axially cooperate with an edge (51) delimiting a portion of the threaded extremity (48) of the bolt (42).

2. A disc brake according to claim 1, characterized in that said abutment means are constituted by an annular member (70) of U-cross-section whose internal cylindrical lateral wall (72) is mounted in the internal bore (43) of said sleeve (40) and whose plane annular bottom (76) is held in engagement between the end of the sleeve (52) and the fixed support (10) when said column (16) is fixed to the latter, said abutment surface (86) being formed by the free external edge of the external cylindrical lateral wall (74) of said annular member (70).

3. A disc brake according to claim 2, characterized in that said internal cylindrical lateral wall (72) of the annular member (70) is provided with an internal radial threaded shoulder (78) having a nominal diameter which is equal to the nominal diameter of the threads of the threaded extremity (48) of the bolt (42).

4. The disc brake according to claim 3, characterized in that said internal radial shoulder (78) has an axial length which is less than the length of the sleeve and delimited by the two end faces (82, 84) of said shoulder (78), the non-threaded portion of the shaft of the bolt having a diameter $(d_1)$ less than said nominal diameter of the threaded extremity (48) of the shaft of said bolt (42).

5. The disc brake according to claim 4, characterized in that the length («1») of the threaded portion (48) of the shaft (46) of the bolt (42) engaged in the tap hole (50) is less than the distance (x) separating the end face (84) of the shoulder (78) facing said fixed support (10) from the extremity (52) of the sleeve (40) in engagement with the fixed support (10).

6. The disc brake according to any of claims 2 to 4, characterized in that said annular member (70) is made of stamped sheet-metal.

7. The disc brake according to claim 6 in combination with any of claims 3 to 5, characterized in that said internal radial threaded shoulder (78) is comprised of a transverse annular flange extending from said internal cylindrical lateral wall (72) of the annular member (70).

## Patentansprüche

1. Scheibenbremse (14), die gleitend gelagert ist auf einem Bremsträger (10) mittels mindestens eines axialen Bolzens (16), der gleitend in einer offenen Bohrung (58) des Bremssattels (14) aufgenommen ist, wobei der Bolzen (16) eine zylindrische Hülse (40) aufweist, die am Bremsträger (10) mittels einer Schraube (42) festgelegt ist, deren Schaft (46) in der Innenbohrung (43) der zylindrischen Hülse angeordnet ist und deren mit Gewinde versehenes Ende (48) in eine Gewindebohrung (50) des Bremsträgers (10) so eingeschraubt ist, dass die Hülse (40) zwischen dem Bremsträger (10) und dem Kopf (44) der Schraube (42) eingespannt ist, wobei Schutzmanschetten (60, 62) zwischen der Hülse (40) und dem Bremssattel (14) beidseitig zu dem letzteren angebracht sind und die Hülse (40) in der Bohrung (58) halten, dadurch gekennzeichnet, dass der Bolzen (16) von den Manschetten (60, 62) unabhängige axiale Anschlagmittel (70) aufweist, die der Hülse (40) zugeordnet sind, um die Axialverschiebung der letzteren bezüglich des Bremssattels (14) zu begrenzen, wenn der Schaft (46) der Schraube (42) aus dem Bremsträger (10) herausgeschraubt wird, wobei die Anschlagmittel (70) einerseits eine Anschlagfläche (86) und andererseits innere radiale Schultern (78) aufweisen, von denen die Anschlagfläche an einer entsprechenden Fläche (88) des Bremssattels (14) frei anliegt, wenn die Hülse (40) durch axialen Zug in einer Richtung entsprechend einem Herausziehen der Schraube (42) vorgespannt wird, und von denen die inneren radialen Schultern (78) axial mit einem Rand (51) zusammenwirken, der einen Abschnitt des mit Gewinde versehenen Endes (48) der Schraube (42) begrenzt.

2. Scheibenbremse nach Anspruch 1, dadurch gekennzeichnet, dass die Anschlagmittel von einem Ring (70) mit einem U-förmigen Querschnitt gebildet werden, dessen innere zylindrische Seitenwand (72) in der Innenbohrung (43) der Hülse (40) angebracht ist und dessen ringförmiger ebener Boden (76) zwischen dem Ende der Hülse (52) und dem Bremsträger (10) eingespannt gehalten wird, wenn der Bolzen (16) an dem letzteren festgelegt ist, wobei die Anschlagfläche (86) von dem freien Aussenrand der äusseren zylindrischen Seitenwand (74) des Ringes (70) gebildet wird.

3. Scheibenbremse nach Anspruch 2, dadurch gekennzeichnet, dass die innere zylindrische Seitenwand (72) des Rings (70) mit einer inneren radialen, mit Gewinde versehenen Schulter (78) versehen ist, deren Nenndurchmesser gleich dem Nenndurchmesser des Gewindes des mit Gewinde versehenen Endes (48) der Schraube (42) ist.

4. Scheibenbremse nach Anspruch 3, dadurch gekennzeichnet, dass die innere radiale Schulter (78) eine axiale Länge hat, die kleiner ist als die Länge der Hülse und begrenzt wird von den beiden Endflächen (82, 84) der Schulter (78), wobei der nicht mit Gewinde versehene Abschnitt des Schraubenschaftes einen Durchmesser ($d_1$) hat, der kleiner ist als der Nenndurchmesser des mit Gewinde versehenen Endes (48) des Schaftes der Schraube (42).

5. Scheibenbremse nach Anspruch 4, dadurch gekennzeichnet, dass die Länge («1») des Gewindeabschnittes (48) des Schaftes (46) der Schraube (42), der in die Gewindebohrung (50) eingeschraubt ist, kleiner ist als der Abstand (x), der die dem Bremsträger (10) zugewandte Endfläche (84) der Schulter (78) von dem am Bremsträger (10) anliegenden Ende (52) der Hülse (40) trennt.

6. Scheibenbremse nach einem der Ansprüche 2–4, dadurch gekennzeichnet, dass der Ring (70) aus einem tiefgezogenen Blechteil besteht.

7. Scheibenbremse nach Anspruch 6 in Verbindung mit einem der Ansprüche 3–5, dadurch gekennzeichnet, dass die radiale innere Schulter (78) von einem querverlaufenden Ringflansch gebildet wird, der von der inneren zylindrischen Seitenwand (72) des Ringes (70) abgeht.

FIG_1

FIG_2

FIG_3a

FIG_3b

FIG_3c